# FASCICULE DE BREVET EUROPEEN

(11) **EP 0 486 391 B1**
(45) Date de publication et mention de la délivrance du brevet: **20.12.1995**
(21) Numéro de dépôt: 91403053.1
(22) Date de dépôt: 14.11.1991
(51) Int. Cl.: H04M 9/02

(54) **Installation de télécommunications numérique privée à commutation interne directe**
Digitale Fernsprechnebenstellenanlage mit direkter interner Vermittlung
Digital private branch exchange with direct internal switching

(30) Priorité: 16.11.1990 FR 9014300
(43) Date de publication de la demande: 20.05.1992
(73) Titulaire: ALCATEL BUSINESS SYSTEMS, F-75008 Paris (FR)
(72) Inventeur: Hanser, Pierre, F-67230 Huttenheim (FR); Kleiber, Frédéric, F-67000 Strasbourg (FR); Lepenven Duval, Brigitte, F-67000 Strasbourg (FR)
(74) Mandataire: Weinmiller, Jürgen

(56) Documents cités:
- US-A- 3 600 518
- PROCEEDINGS IEEE INTERNATIONAL CONFERENCE ON COMMUNICATIONS, Seattle, Washington, 11-13 juin 1973, session 50, pages 24-29; E.R. HAFNER et al: "A digital loop communication system"

## Description

La présente invention concerne une installation de télécommunications numérique privée à commutation interne directe.

Les installations privées actuelles comprennent couramment un autocommutateur raccordé au réseau public d'une part et à des terminaux tels que téléphone, télécopieur, répondeur, micro-ordinateur, d'autre part. On qualifiera cette installation d'analogique tant pour le réseau que pour les terminaux étant donné la nature des signaux qu'elle échange avec ce réseau. Un tel autocommutateur comprend des moyens de commutation externe pour connecter un terminal au réseau et des moyens de commutation interne pour relier deux terminaux de l'installation indépendamment du réseau. La commutation interne se fait au moyen d'un plan de numérotation qui associe chaque terminal à un numéro d'identification. Par ailleurs, pour établir une communication, un terminal émet un appel dont la structure précise s'il s'adresse au réseau, appel externe, ou s'il s'adresse à un autre terminal de l'installation, appel interne. La solution généralement adoptée consiste à composer un préfixe, le chiffre zéro par exemple, pour préciser qu'il s'agit d'une communication externe.

Les installations privées doivent évoluer pour prendre en compte la transformation du réseau public analogique en réseau numérique à intégration de services, ci-après nommé le RNIS, tel que défini par les instances internationales en matière de télécommunications. Dans ce réseau numérique, les terminaux numériques sont raccordés par des liaisons qui supportent chacune un canal de signalisation prévu notamment pour acheminer les appels et des canaux de données pour véhiculer la communication proprement dite qu'il s'agisse de parole ou de données. Il est de plus prévu que plusieurs terminaux partagent un même canal de signalisation. Les communications internes sont ici aussi établies par l'autocommutateur qui considère, pour les appels, les canaux de signalisation comme des liaisons unitaires entre un terminal et lui-même. Cette solution est à rapprocher de celle utilisée dans le cadre du réseau analogique et est donc équivalente à celle du plan de numérotation.

Le plan de numérotation ou une solution analogue nécessite des moyens spécifiques et notamment une mémoire particulière, ce qui représente une contrainte importante dans des petites installations où la capacité totale en terme de mémoire est souvent limitée.

On connaît par le document intitulé "A digital loop communication system" publié en pages 24-29 de la Session 50, publiée, à l'occasion de PROCEEDINGS IEEE INTERNATIONAL CONFERENCE ON COMMUNICATIONS à Seattle du 11 au 13 juin 1973, un système de communication numérique par bloc de données qui est raccordable à un réseau téléphonique public et qui comporte une boucle à laquelle sont raccordés des stations d'abonné identifiables chacune par un numéro d'identification individuel. Chaque bloc émis par une station pour communiquer comporte les numéros d'identification de destinataire et de la station qui l'a émis. Toutefois une tel système n'est pas prévue pour fonctionner dans une installation comportant un autocommutateur.
L'invention propose donc une installation de télécommunications numérique privée reliée à un réseau public et comportant des terminaux, affectés chacun d'un numéro d'identification, qui comprennent chacun des moyens permettant de produire et de transmettre un numéro d'appel interne ou externe, par l'intermédiaire d'un canal numérique dit de signalisation, prévu pour permettre un transfert de signalisation vers un autre terminal soit directement dans l'installation soit via celle-ci et le réseau public et des moyens pour détecter la correspondance d'un numéro d'appel reçu, via le canal dit de signalisation par lequel le terminal considéré est desservi, avec le numéro d'identification qui lui est affecté, ladite installation comportant de plus des moyens de commutation interne lui permettant de connecter en mode point à point un terminal ayant détecté une telle correspondance avec le terminal ayant émis le numéro d'appel éventuellement via le réseau public. Selon une caractéristique de l'invention, l'installation est compatible avec un réseau numérique à intégration de service RNIS et elle comporte des moyens pour acheminer un numéro d'appel, émis par un terminal émetteur, par au moins un canal dit de signalisation au moins vers tous les terminaux ainsi que des moyens de commutation auxquels tous les terminaux sont reliés permettant à chacun des terminaux de l'installation de communiquer en mode point à point avec un autre terminal par l'intermédiaire d'au moins un canal de données associé au canal de signalisation au niveau de la liaison desservant le terminal considéré de l'installation.

Les différents objets et caractéristiques de la présente invention apparaîtrons maintenant de manière plus précise dans la description d'exemples de réalisation donnés à titre non limitatif, étant entendu que des caractéristiques importantes autres que celles évoquées ci-dessus sont rappelées dans les sous-revendications ci-jointes.
C'est tout d'abord la commutation interne, celle qui permet d'établir une communication entre deux terminaux d'une même installation, qui sera présentée.

Dans le réseau numérique à intégration de services, tous les terminaux numériques qui appartiennent à une installation privée ont accès à un canal de signalisation numérique auquel accède également un autocommutateur.

Un tel canal de signalisation est structuré en trames temporelles. Ces trames servent de support aux messages de signalisation qu'échangent les terminaux et l'autocommutateur, notamment pour réaliser des appels. Un appel débute par la formation d'un message de signalisation particulier, le message d'appel qui est connu par l'homme de métier sous l'expression "message d'établissement du protocole de signalisation". Ce message comprend notamment un champ d'identification de destinataire, le champ "sous-adresse" défini dans le cadre du RNIS, par exemple, champ qui est prévu pour recevoir le numéro d'identification du terminal auquel est destiné l'appel.

Il faut ici rappeler que les terminaux numériques peuvent employer deux types de numérotation d'appel.

Selon la numérotation dite "en bloc", un terminal fait l'acquisition des différents chiffres composant un numéro d'identification et forme ce numéro en réponse à une commande de validation qui résulte de l'appui sur une touche particulière.

Selon la numérotation dite "par chevauchement", les différents chiffres composant un numéro d'identification sont placés dans différents messages de signalisation au fur et à mesure de leur acquisition. Aucune validation n'est nécessaire, l'autocommutateur formant lui-même le numéro.

L'invention prévoit qu'un appel interne sera formé par la succession d'un symbole de sélection et d'un numéro d'identification. Le symbole correspondra avantageusement à l'une des deux touches d'un clavier qui ne représentent pas un chiffre mais qui sont identifiées généralement par un astérisque ou par un dièse.

L'autocommutateur, à cet effet, comprend des moyens de sélection qui détectent la présence ou l'absence de ce symbole de sélection. En cas d'absence, l'appel est traité comme un appel externe de manière connue en dehors de l'invention. En cas de présence, il s'agit bien d'un appel interne dont le traitement sera explicité par la suite.

Si l'on considère un terminal à numérotation en bloc, la formation de l'appel ne pose pas de difficulté particulière, la saisie du symbole de sélection commandant directement le remplissage du champ sous-adresse du message d'appel par le numéro d'identification du destinataire de cet appel après réception de la commande de validation.

Si l'on considère maintenant un terminal à numérotation par chevauchement, on lui adjoint des moyens de conversion qui permettent, dès la saisie du symbole de sélection, de mémoriser dans un registre les différents chiffres composant le numéro d'identification. Lorsque le numéro complet a été mémorisé, le contenu de registre est placé également dans le champ sous-adresse du message d'appel. Ces moyens de conversion assurent une fonction qui revient à transformer un terminal à numérotation par chevauchement en un terminal à numérotation en bloc.

Dans un premier mode de réalisation de l'installation, un seul canal de signalation est prévu. L'autocommutateur a un rôle passif dans la transmission d'un appel. Il se contente d'acheminer le message d'appel émis par un terminal à tous les autres terminaux par ce canal de signalisation. Chaque terminal comprend des moyens de réception pour analyser continuellement le canal de signalisation et détecter la correspondance entre un numéro d'appel véhiculé par un message d'appel et son propre numéro d'identification. Il élabore en retour une demande de commutation à destination de l'autocommutateur qui établit alors la communication entre l'émetteur et le destinataire de l'appel. Il apparaît ainsi qu'il n'est pas nécessaire de recourir à un plan de numérotation étant donné que l'autocommutateur connaît directement les deux terminaux à connecter.

Dans un second mode de réalisation de l'installation, plusieurs canaux de signalisation sont prévus, chaque terminal utilisant généralement un seul canal. L'autocommutateur accèdant à tous les canaux transmet l'appel produit sur un canal de signalisation particulier aux autres canaux afin que cet appel soit présenté à tous les terminaux. De la même manière que dans le mode de réalisation précédent, chaque terminal comprend des moyens de réception et produit une demande de commutation à destination de l'autocommutateur.

Selon une caractéristique additionnelle, l'installation est de plus prévue pour le raccordement d'un terminal analogique également affecté d'un numéro d'identification. On y incorpore dans ce cas un module de raccordement qui a pour objet, en ce qui concerne la gestion des appels, de transformer ce terminal analogique en un terminal numérique.

Ce module accède à un canal analogique qui est le support de communication du terminal analogique et à un canal de signalisation numérique de l'installation numérique. Il comprend des moyens de réception identiques à ceux décrits ci-dessus et des moyens de traduction pour transmettre sur le canal analogique un appel émis par un terminal numérique dans une forme compréhensible par le terminal analogique. Ce module comprend également des moyens d'adaptation pour placer un numéro d'identification, émis par le terminal analogique dans le canal analogique lors d'un appel, dans le champ sous-adresse d'un message d'appel qui prend place dans ce canal de signalisation.

L'installation comprend de plus les éléments nécessaires pour permettre d'acheminer une communication entre le réseau numérique ou un terminal numérique et le terminal analogique mais, ces éléments sortant du cadre de la présente invention, ils ne seront pas plus détaillés.

Il apparaît ainsi que le terminal analogique est considéré par l'autocommutateur comme un terminal numérique et, par conséquent, toutes les remarques précédentes s'appliquent.

Par ailleurs, l'installation a été décrite avec un seul terminal analogique. L'homme de métier généralisera aisément cet exemple particulier au cas où il y a plusieurs terminaux analogiques. Il suffit en effet de prévoir un module de raccordement tel que présenté plus haut pour chaque terminal analogique.

Les commutations externes, celles qui permettent d'établir une communication entre un terminal (analogique ou numérique) de l'installation et le réseau public ne seront pas d'avantage exposées car l'invention ne les concernent pas particulièrement. Des solutions connues font partie des connaissances de l'homme de métier. Le seul point important est que l'autocommutateur considère tout appel qui ne commence pas par le symbole de sélection comme un appel externe. Les communications externes s'en trouvent simplifiées puisqu'il n'est pas nécessaire de prévoir la composition d'un préfixe avant la composition d'un numéro identifiant un correspondant externe à l'installation.

La seule contrainte sur les numéros d'identification des terminaux de l'installation est que ceux-ci soient compatibles avec la taille du champ sous-adresse du réseau RNIS, ou, plus généralement, du champ d'identification de destinataire.

L'invention permet ainsi au moyen d'une méthode de numérotation unique de former un appel interne ou externe à partir d'un terminal analogique ou numérique, et, dans ce dernier cas, quel que soit le type d'interface employée pour le raccordement à l'autocommutateur. Il peut s'agir d'une interface normalisée, une interface connue sous la terminologie du RNIS comme interface SO/TO, ou d'une interface dite "interface fabricant" qui permet, elle aussi le raccordement.

## Revendications

1. Installation de télécommunications numérique privée reliée à un réseau public et comportant des terminaux, affectés chacun d'un numéro d'identification, qui comprennent chacun des moyens permettant de produire et de transmettre un numéro d'appel interne ou externe, par l'intermédiaire d'un canal numérique, dit de signalisation, prévu pour permettre un transfert de signalisation vers un autre terminal soit directement dans l'installation soit via celle-ci et le réseau public et des moyens pour détecter la correspondance d'un numéro d'appel reçu, via le canal dit de signalisation par lequel le terminal considéré est desservi, avec le numéro d'identification qui lui est affecté, ladite installation comportant de plus des moyens de commutation interne lui permettant de connecter en mode point à point un terminal ayant détecté une telle correspondance avec le terminal ayant émis le numéro d'appel éventuellement via le réseau public, caractérisée en ce qu'elle comporte des moyens pour être compatible avec un réseau numérique à intégration de service RNIS, des moyens pour acheminer un numéro d'appel, émis par un terminal émetteur, par au moins un canal dit de signalisation au moins vers tous les terminaux qu'elle comporte, et des moyens de commutation auxquels tous les terminaux sont reliés permettant à chacun des terminaux de l'installation de communiquer en mode point à point avec un autre terminal par l'intermédiaire d'au moins un canal de données associé au canal de signalisation au niveau de la liaison desservant le terminal considéré de l'installation.

2. Installation de télécommunications numérique privée, selon la revendication 1, caractérisée en ce qu'elle comporte de plus au moins un terminal analogique également affecté d'un numéro d'identification et qui comprend des moyens permettant de produire et de transmettre un numéro d'appel interne ou externe vers un autre terminal soit dans l'installation soit via celle-ci et le réseau public, ledit terminal analogique étant associé à un module de raccordement qui accède à un canal dit de signalisation et qui est pourvu de moyens pour détecter la correspondance d'un numéro d'appel reçu, via ce canal dit de signalisation, avec le numéro d'identification qui est affecté au terminal analogique auquel il est associé, ainsi que de moyens pour traduire un numéro d'identification, émis par ce terminal analogique auquel il est associé, sous la forme numérique d'un numéro d'appel interne en vue de sa transmission par l'intermédiaire du canal dit de signalisation desservant ledit module.

3. Installation de télécommunications numérique privée, selon au moins l'une des revendications 1 et 2 , caractérisée en ce que chaque numéro d'appel interne y est formé par la succession d'un symbole de sélection et du numéro d'identification du terminal destinataire, chaque numéro d'appel externe y étant constitué du seul numéro d'identification propre au terminal destinataire.

4. Installation de télécommunications numérique privée, selon au moins les revendications précédentes 1 et 3, caractérisée en ce qu'elle comporte des terminaux ayant chacun des moyens de numérotation d'appel par bloc impliquant une validation du numéro d'identification émis, avant envoi via ledit canal de signalisation du terminal émetteur considéré par l'intermédiaire d'un champ d'identification de destinataire d'un message d'établissement de protocole de signalisation.

5. Installation de télécommunications numérique privée, selon au moins les revendications précédentes 1 et 3, caractérisée en ce qu'elle comporte des terminaux ayant chacun des moyens de numérotation d'appel par chevauchement impliquant une mémorisation temporaire des chiffres formant un numéro d'identification, qui est déclenchée par la réception dudit symbole de sélection, pour permettre le placement simultané des dits chiffres dans un champ d'identification de destinataire d'un message d'établissement de protocole de signalisation, avant envoi de ce message via ledit canal de signalisation du terminal émetteur considéré.

## Patentansprüche

1. Digitale Fernmelde-Nebenstellenanlage, die an ein öffentliches Netz angeschlossen ist und Endgeräte enthält, denen je eine Identifizierungsnummer zugewiesen ist und die je Mittel zur Erzeugung und Übermittlung einer internen oder externen Rufnummer über einen digitalen Signalisierungskanal aufweisen, um eine Signalisierung entweder direkt in der Anlage oder über diese und das öffentlich Netz an ein anderes Endgerät zu übermitteln, wobei weiter Mittel vorgesehen sind, um die Identität einer über den Signalisierungskanal, über den das betreffende Endgerät bedient wird, empfangenen Rufnummer mit der eigenen Identifizierungsnummer zu erfassen, und wobei die Anlage weiter interne Schaltmittel aufweist, mit denen ein eine solche Identität erkennendes Endgerät mit dem diese Rufnummer aussendenden Endgerät von Punkt zu Punkt ggf. über das öffentliche Netz durchgeschaltet werden kann, dadurch gekennzeichnet, daß die Anlage Mittel aufweist, die mit einem ISDN-Netz kompatibel sind, Mittel, um eine von einem rufenden Endgerät ausgesendete Rufnummer über mindestens einen Signalisierungskanal zumindest an alle Endgeräte der Anlage zu übertragen, sowie Schaltmittel, an die alle Endgeräte angeschlossen sind und die jedes der Endgeräte der Anlage von Punkt zu Punkt mit einem anderen Endgerät über mindestens einen dem Signalisierungskanal in Höhe der Verbindung zwischen dem betreffenden Endgerät und der Anlage zugeordneten Datenkanal zu verkehren erlauben.

2. Digitale Fernmelde-Nebenstellenanlage nach Anspruch 1, dadurch gekennzeichnet, daß sie außerdem mindestens ein analoges Endgerät enthält, dem auch eine Identifizierungsnummer zugewiesen ist und das Mittel enthält, um eine interne oder externe Rufnummer zu erzeugen und an ein anderes Endgerät entweder innerhalb der Anlage oder über diese und das öffentliche Netz zu übertragen, wobei das analoge Endgerät einem Anschlußmodul zugeordnet ist, der Zugang zu einem Signalisierungskanal hat und Mittel enthält, um die Identität der über diesen Signalisierungskanal empfangenen Rufnummer mit der diesem analogen Endgerät zugewiesenen Identifizierungsnummer zu erfassen, sowie Mittel, um eine Identifizierungsnummer, die von diesem analogen Endgerät ausgesendet wird, in die digitale Form einer internen Rufnummer umzuwandeln und über den Signalisierungskanal, der diesen Modul bedient, zu übertragen.

3. Digitale Fernmelde-Nebenstellenanlage nach mindestens einem der Ansprüche 1 und 2, dadurch gekennzeichnet, daß jede interne Rufnummer durch die Aufeinanderfolge eines Selektionssymbols und der Identifizierungsnummer des gerufenen Endgeräts gebildet wird, während jede externe Rufnummer nur durch die Identifizierungsnummer des gerufenen Endgeräts gebildet wird.

4. Digitale Fernmelde-Nebenstellenanlage nach mindestens den vorhergehenden Ansprüchen 1 und 3, dadurch gekennzeichnet, daß sie Endgeräte enthält, bei denen die Rufnummernbildung blockweise erfolgt und eine Bestätigung der gebildeten Identifizierungsnummer vor der Aussendung über den Signalisierungskanal des betreffenden rufenden Endgeräts über ein Identifizierungsfeld des gerufenen Endgeräts erfordert, für das eine Nachricht zum Aufbau eines Signalisationsprotokolls bestimmt ist.

5. Digitale Fernmelde-Nebenstellenanlage nach mindestens den vorhergehenden Ansprüchen 1 und 3, dadurch gekennzeichnet, daß sie Endgeräte besitzt, in denen die Rufnummernbildung überlappend erfolgt und die eine vorübergehende Speicherung der eine Identifizierungsnummer bildenden Ziffern erfordert, wobei dieser Speicherung bei Empfang des Selektionssymbols ausgelöst wird, um die gleichzeitige Einspeicherung der Ziffern in einem Identifizierungsfeld des Endgeräts, für das eine Nachricht zum Aufbau eines Signalisierungsprotokolls bestimmt ist, vor der Aussendung dieser Nachricht über den Signalisierungskanal des betreffenden sendenden Endgeräts zu ermöglichen.

## Claims

1. Private digital telecommunication installation connected to a public network and including terminals each having an identification number and each including means for producing and transmitting an internal or external telephone number by means of a digital signalling channel to enable transfer of signalling to another terminal either directly in the installation or via the latter and the public network and means for detecting a match between a telephone number received via the signalling channel by which the terminal in question is served with the identification number which is assigned to it, said installation further including internal switching means enabling it to connect in point-to-point mode a terminal which has detected any such match with the terminal which sent the telephone number, possibly via the public network, characterised in that it includes means to be compatible with an integrated services digital network (ISDN), means for routing a telephone number, sent by a sending terminal, via at least one signalling channel at least to all the terminals that it includes, and switching means to which all the terminals are connected enabling each terminal of the installation to communicate in point-to-point mode with another terminal through the intermediary of at least one data channel associated with the signalling channel at the level of the link serving the terminal in question of the installation.

2. Private digital telecommunication installation according to claim 1 characterised in that it further includes at least one analogue terminal also assigned an identification number and which includes means for producing and transmitting an internal or external telephone number to another terminal either in the installation or via the latter and the public network, said analogue terminal being associated with a connection module which accesses a signalling channel and which has means for detecting a match between a telephone number received via said signalling channel and the identification number which is assigned to the analogue terminal with which it is associated, and means for translating an identification number sent by said analogue terminal with which it is associated into the form of a digital internal telephone number for transmission via said signalling channel serving said module.

3. Private digital telecommunication installation according to claim 1 and/or claim 2 characterised in that each internal telephone number is formed by the sequence of a selection symbol and the number identifying the destination terminal, each external telephone number consisting exclusively of the identification number specific to the destination terminal.

4. Private digital telecommunication installation according to claim 1 and/or claim 2 and/or claim 3 characterised in that it includes terminals each having en bloc dialling means entailing validation of the identification number sent before sending via said signalling channel of the sending terminal in question through the intermediary of a destination identification field of a signalling protocol setup message.

5. Private digital telecommunication installation according to claim 1 and/or claim 2 and/or claim 3 characterised in that it includes terminals each having overlap dialling means entailing temporary storage of digits forming an identification number which is instigated by reception of said selection symbol to enable simultaneous placement of said digits in a destination identification field of a signalling protocol set-up message before sending of said message via said signalling channel of the sending terminal in question.
